# EUROPÄISCHE PATENTSCHRIFT

(11) **EP 3 158 151 B1**
(45) Veröffentlichungstag und Bekanntmachung des Hinweises auf die Patenterteilung: **20.04.2022**
(21) Anmeldenummer: 15723542.5
(22) Anmeldetag: 27.05.2015
(51) Int. Cl.: E05B 47/00, E05B 79/20, E05B 81/06, H02K 21/14, H02K 37/12, H02K 21/24, H02K 33/16

(54) **KRAFTFAHRZEUGSCHLOSS**
MOTOR VEHICLE LOCK
SERRURE DE VÉHICULE AUTOMOBILE

(30) Priorität: 21.06.2014 DE 102014108712
(43) Veröffentlichungstag der Anmeldung: 26.04.2017
(73) Patentinhaber: Brose Schliesssysteme GmbH & Co. KG, 42369 Wuppertal (DE)
(72) Erfinder: REINERT, Jörg, 42899 Remscheid (DE); PSZOLA, Peter, 53123 Bonn (DE); KOTHE, Markus, 42553 Velberg (DE); STEINSHORN, Axel, 97957 Wittighausen (DE)
(74) Vertreter: Gottschald, Jan
(86) Internationale Anmeldenummer: PCT/EP2015/061620
(87) Internationale Veröffentlichungsnummer: WO 2015/193066

(56) Entgegenhaltungen:
- EP-A1- 0 175 903
- EP-A1- 3 032 718
- WO-A1-2013/127531
- WO-A1-2015/025033
- WO-A2-2011/055227
- DE-A1- 10 322 474
- US-A- 6 020 804
- US-A1- 2009 021 089

## Beschreibung

Die Erfindung betrifft ein Kraftfahrzeugschloss gemäß dem Oberbegriff von Anspruch 1 und ein Verfahren zur Ansteuerung eines Kraftfahrzeugschlosses oder eines Antriebs gemäß Anspruch 14.

Das in Rede stehende Kraftfahrzeugschloss findet Anwendung bei allen Arten von Verschlusselementen eines Kraftfahrzeugs. Dazu gehören insbesondere Seitentüren, Hecktüren, Heckklappen, Heckdeckel oder Motorhauben. Diese Verschlusselemente können grundsätzlich auch nach Art von Schiebetüren ausgestaltet sein.

Heutige Kraftfahrzeugschlösser sind mit einer ganzen Reihe von Funktionen ausgestattet, die mittels elektrischer Antriebe motorisch auslösbar sind. Im Sinne einer hohen Betriebssicherheit bei allen denkbaren Umgebungsbedingungen, insbesondere im Hinblick auf ein mögliches Vereisen des Kraftfahrzeugschlosses, müssen solche Antriebe vergleichsweise hohe Antriebskräfte beziehungsweise Antriebsmomente aufbringen. Gleichzeitig ist der für die Antriebe zur Verfügung stehende Bauraum äußerst gering. Ferner spielen möglichst geringe Kosten im Bereich der Kraftfahrzeugschlösser eine ganz besondere Rolle.

Das bekannte Kraftfahrzeugschloss (WO 2013/127531 A1), von dem die Erfindung ausgeht, weist einen Antrieb zur Verstellung eines Stellelements auf, der einen Rotor und einen Ständer aufweist. Der Ständer ist mit einer Spulenanordnung mit insgesamt vier Spulen und entsprechend vier der Spulenanordnung zugeordneten magnetleitenden Polen zum Leiten des von der Spulenanordnung erzeugten Magnetfelds ausgestattet. Durch unterschiedliche stationäre Bestromung der Spulenanordnung lassen sich verschiedene magnetisch stabile Antriebsstellungen des Rotors einstellen, sodass auf Endanschläge für das Anfahren der Antriebsstellungen des Rotors verzichtet werden kann.

Optimierungspotential bei dem bekannten Kraftfahrzeugschloss besteht in der Steigerung der Antriebsmomente, was durch eine Änderung der Auslegung der Spulen zwar grundsätzlich möglich wäre. Allerdings ergeben sich hierfür bauraumbedingte Grenzen.

Bei einer anderen Bauform für einen Antrieb eines Kraftfahrzeugschlosses (DE 10 2008 012 563 A1) ist die Spulenanordnung mit Luftspulen ausgestattet, die mit einer rotorseitigen Permanentmagnetanordnung zusammenwirken. Dies führt zu einer besonders kostengünstig realisierbaren Anordnung. Nachteilig ist jedoch der geringe Wirkungsgrad und das wenig optimale Drehmomentverhalten des Antriebs. In der US 6,020,804 ist eine Axialflussmaschine mit winkelversetzten Spulen beiderseits einer Magnetscheibe für ein Ventil offenbart.

Der Erfindung liegt das Problem zugrunde, das bekannte Kraftfahrzeugschloss derart auszugestalten und weiterzubilden, dass das Drehmomentverhalten unter Berücksichtigung eines geringen verfügbaren Bauraums optimiert wird.

Das obige Problem wird bei einem Kraftfahrzeugschloss gemäß dem Oberbegriff von Anspruch 1 durch die Merkmale des kennzeichnenden Teils von Anspruch 1 gelöst.

Wesentlich ist die grundsätzliche Überlegung, dass sich mit einer Axialflussmaschine hohe Antriebsmomente in kompakter Bauweise realisieren lassen. Darauf aufbauend ist erkannt worden, dass der grundsätzliche Aufbau einer Axialflussmaschine eine Aufteilung der Spulenanordnung in zwei Abschnitte ermöglicht, die bezogen auf die geometrische Rotorachse axial zueinander versetzt angeordnet sind und die sich entlang der geometrischen Rotorachse auf gegenüberliegenden Seiten des Rotors befinden. Dies bedeutet, dass sich der erste Abschnitt der Spulenanordnung, insbesondere vollständig, auf einer Seite des Rotors befindet und dass sich der zweite Abschnitt der Spulenanordnung, insbesondere vollständig, auf einer entlang der geometrischen Rotorachse gegenüberliegenden Seite des Rotors befindet.

Dies bedeutet, dass die Spulenanordnung bezogen auf die geometrische Rotorachse axial in die zwei obigen Abschnitte zweigeteilt ist. Damit ist zusätzlicher Bauraum für die Spulen der Spulenanordnung geschaffen worden, ohne die Außenabmessungen des Antriebs insgesamt übermäßig zu vergrößern.

Im Einzelnen wird vorgeschlagen, dass die magnetleitenden Pole jeweils, ggf. in Abhängigkeit von der Rotorstellung, mit dem Rotor einen bezogen auf die geometrische Rotorachse axialen Luftspalt ausbilden, sodass sich ein bei Axialflussmaschinen notwendiges, axiales Arbeitsfeld ausbilden kann. Mit dem Begriff "axialer Spalt" ist hier gemeint, dass der Spalt eine Entfernung in bezogen auf die Rotorachse axialer Richtung überbrückt.

Vorschlagsgemäß ist es wie oben angedeutet zusätzlich vorgesehen, dass ein erster Abschnitt der Spulenanordnung mit mindestens einer Spule und ein zweiter Abschnitt der Spulenanordnung mit mindestens einer Spule bezogen auf die geometrische Rotorachse axial zueinander versetzt und entlang der geometrischen Rotorachse auf gegenüberliegenden Seiten des Rotors angeordnet sind. Bereits dadurch ergibt sich für die Spulenanordnung der doppelte Bauraum für die Spulenanordnung auf den gegenliegenden Seiten des Rotors, wenn man von einer gewissen Verlängerung des Antriebs absieht. Eine solche Verlängerung kann aber regelmäßig in Kauf genommen werden.

Aus dem Bereich der Ansteuerung von Ventilen und Drosselklappen ist bereits bekannt, das bereitgestellte Drehmoment unter Minimierung des verwendeten Bauraums zu optimieren, und hierfür zwei Abschnitte einer Spulenanordnung axial zueinander versetzt und entlang der geometrischen Rotorachse auf gegenüberliegenden Seiten eines Rotors anzuordnen (wie beispielsweise in EP 0 175 903 A1 und WO 2011/055227 A2 gezeigt wird). Auf die Verwendung solcher Antriebe für ein Kraftfahrzeugschloss wird hier allerdings nicht verwiesen.

Grundsätzlich können die Spulen der beiden Abschnitte der Spulenanordnung jeweils bezogen auf die geometrische Rotorachse aufeinander ausgerichtet sein. Bei der besonders bevorzugten Ausgestaltung gemäß Anspruch 2 ist es allerdings so, dass mindestens eine Spule des ersten Abschnitts der Spulenanordnung bezogen auf die geometrische Rotorachse winkelversetzt zu der mindestens einen Spule des zweiten Abschnitts der Spulenanordnung angeordnet ist beziehungsweise sind. Hierdurch ergibt sich eine höhere Variabilität bei der Erzeugung des magnetischen Arbeitsfelds.

Bei einer weiter bevorzugten Ausgestaltung weist der Rotor eine vorzugsweise scheibenförmige Permanentmagnetanordnung auf, deren quer zu der geometrischen Rotorachse verlaufenden Stirnseiten den magnetleitenden Polen zur Ausbildung der axialen Luftspalte zugewandt sind. Das von der Spulenanordnung erzeugte Magnetfeld wirkt mit dem Magnetfeld der Permanentmagnetanordnung derart zusammen, dass sich ein Antriebsmoment auf den Rotor ausbildet. Dies entspricht der an sich bekannten Funktionsweise einer Axialflussmaschine.

Bei der Ausgestaltung gemäß Anspruch 3 wird deutlich, dass die vorschlagsgemäße Lösung eine höhere Flexibilität bei der Auslegung der Spulenanordnung erlaubt, da die Spulen der beiden gegenüberliegenden Abschnitte der Spulenanordnung einander überlappen können. Dadurch lassen sich die Induktivitäten der Spulen insbesondere durch größere Spulendurchmesser und höhere Windungszahlen steigern.

Die weiter bevorzugte Ausgestaltung gemäß Anspruch 7 zeigt eine besonders vorteilhafte Möglichkeit des magnetischen Rückschlusses für das von einem Abschnitt der Spulenanordnung erzeugte Magnetfeld. Das hier vorgeschlagene Überlappen der Polschuhe bietet in der bevorzugten Variante die Möglichkeit, dass die Polschuhe selbst einen magnetischen Rückschluss für zwei auf der anderen Seite des Rotors angeordnete Polschuhe bereitstellen.

Eine weiter verbesserte Bauraumausnutzung zeigt Anspruch 9, nach dem die Spulen und/oder die Pole von einer im Querschnitt senkrecht zu der geometrischen Rotorachse kreisförmigen Formgebung abweichen. Auf diese Weise lassen sich die Induktivitäten der Spulen der Spulenanordnung entsprechend steigern und insbesondere an die jeweiligen Bauraumerfordernisse anpassen.

Gemäß Anspruch 10 ist das Kraftfahrzeugschloss mit einer Schlossmechanik ausgestattet, die in unterschiedliche Funktionszustände bringbar ist. Beispiele hierfür sind die Funktionszustände "verriegelt", "entriegelt", "diebstahlgesichert", "verriegelt-kindergesichert" und "entriegelt-kindergesichert".

Die oben angesprochenen Funktionszustände betreffen die Möglichkeit des Öffnens einer Kraftfahrzeugtür o. dgl. mittels eines Türinnengriffs und mittels eines Türaußengriffs. Im Funktionszustand "verriegelt" kann von innen geöffnet werden, nicht jedoch von außen. Im Funktionszustand "entriegelt" kann sowohl von innen als auch von außen geöffnet werden. Im Funktionszustand "diebstahlgesichert" kann weder von innen noch von außen geöffnet werden. Im Funktionszustand "verriegelt-kindergesichert" kann von innen entriegelt, aber weder von innen noch von außen geöffnet werden. Im Funktionszustand "entriegelt-kindergesichert" kann von außen, nicht jedoch von innen geöffnet werden.

Bei der weiter bevorzugten Ausgestaltung gemäß Anspruch 11 ist das Stellelement mittels des Antriebs in mindestens zwei Steuerstellungen bringbar, um entsprechende Funktionszustände der Schlossmechanik einzustellen. Weiter vorzugsweise entsprechen die Steuerstellungen jeweils genau einem Funktionszustand, sodass sich die betreffenden Funktionszustände entsprechend mittels des Antriebs einstellen lassen.

Gemäß Anspruch 12 wird vorgeschlagen, dass durch unterschiedliche stationäre Bestromung der Spulenanordnung und die mit der Bestromung einhergehende magnetische Wechselwirkung zwischen Rotor und Ständer mindestens zwei magnetisch stabile Antriebsstellungen des Rotors erzeugbar sind. Die Formulierung "magnetisch stabil" bedeutet hier, dass die Bestromung der Spulenanordnung mit dem resultierenden Magnetfeld dafür sorgt, dass der Rotor bei einer Auslenkung aus der jeweiligen Antriebsstellung heraus stets zurück in diese Antriebsstellung getrieben wird. Dies betrifft selbstredend eine Auslenkung des Stellelements in beiden Verstellrichtungen. Der Begriff "stationäre Bestromung" bedeutet hier, dass sich die eingestellte Bestromung im Zeitbereich nicht ändert. Der Begriff "Bestromung" ist dabei allgemein zu verstehen und umfasst sowohl das Anlegen einer elektrischen Spannung als auch das Einprägen eines elektrischen Stroms in die Spulenanordnung. Dabei kann die Spannung beziehungsweise der Strom auch gepulst o. dgl. sein. Im einfachsten Fall wird für eine stationäre Bestromung im obigen Sinne eine konstante Spannung auf den betreffenden Teil der Spulenanordnung aufgeschaltet.

Im Ergebnis ist es hier und vorzugsweise so, dass sich verschiedene, oben beispielhaft angesprochene Funktionszustände der Schlossmechanik über das Erzeugen magnetisch stabiler Antriebsstellungen anfahren lassen. Auf einen Endanschlag beim Anfahren der Antriebsstellungen kann somit verzichtet werden.

Es darf zur Klarstellung darauf hingewiesen werden, dass die Bestromung ursächlich für die magnetische Stabilität ist und dass die magnetische Stabilität bei Wegfall der Bestromung je nach konstruktiver Ausgestaltung des Antriebs wegfallen kann.

Nach einer weiteren Lehre gemäß Anspruch 14, der ebenfalls eigenständige Bedeutung zukommt, wird ein Verfahren zur Ansteuerung eines vorschlagsgemäßen Kraftfahrzeugschlosses beziehungsweise eines vorschlagsgemäßen Antriebs beansprucht.

Wesentlich nach der weiteren Lehre ist die Überlegung, die Spulenanordnung für das Anfahren von mindesten zwei magnetisch stabilen Antriebsstellungen des Stellelements unterschiedlich stationär zu bestromen. Die hiermit verbundenen Vorteile wurden weiter oben bereits erläutert.

Im Folgenden wird die Erfindung anhand einer lediglich ein Ausführungsbeispielen darstellenden Zeichnung näher erläutert. In der Zeichnung zeigt
- Fig. 1: die für die Erfindung wesentlichen Bestandteile eines vorschlagsgemäßen Kraftfahrzeugschlosses,
- Fig. 2: den Antrieb des Kraftfahrzeugschlosses gemäß Fig. 1 in einer schematischen, perspektivischen Darstellung ohne Außengehäuse,
- Fig. 3: den Antrieb gemäß Fig. 2 ohne Rotorgehäuse,
- Fig. 4: den Antrieb gemäß Fig. 3 in einer Schnittansicht entlang der Schnittlinie V-V,
- Fig. 5: die Pole des Antriebs gemäß Fig. 3 in einer vom Antrieb im Übrigen isolierten Ansicht und
- Fig. 6: die Permanentmagnetanordnung des Antriebs gemäß Fig. 3 in einer vom Antrieb im Übrigen isolierten Ansicht.

Es darf vorab darauf hingewiesen werden, dass in der Zeichnung nur die Komponenten des vorschlagsgemäßen Kraftfahrzeugschlosses dargestellt sind, die für die Erläuterung der Lehre notwendig sind. Entsprechend ist eine Schlossfalle, die in üblicher Weise mit einem Schließbolzen o. dgl. zusammenwirkt und die mittels einer Sperrklinke in einer Hauptschließstellung und in einer ggf. vorhandenen Vorschließstellung gehalten wird, in der Zeichnung nicht dargestellt.

Das Kraftfahrzeugschloss weist ein hier und vorzugsweise um eine Stellelementachse 1 verstellbares Stellelement 2 auf, bei dem es sich hier und vorzugsweise um eine Steuerwelle handelt. Alle Ausführungen zu der Steuerwelle 2 gelten analog für alle anderen Arten von Stellelementen.

Das Stellelement 2 kann grundsätzlich mehrstückig ausgestaltet sein, beispielsweise mindestens zwei miteinander gekoppelte, insbesondere miteinander verbundene, auf die Stellelementachse 1 ausgerichtete Wellenabschnitte aufweisen. Denkbar ist aber auch, dass das Stellelement 2 einstückig ausgestaltet ist.

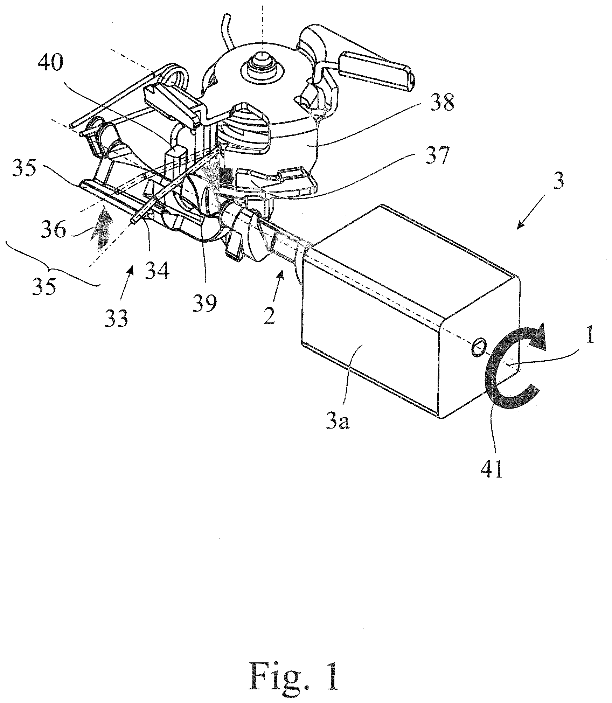

Weiter ist das Kraftfahrzeugschloss mit einem Antrieb 3 zur Verstellung des Stellelements 2 ausgestattet. Der Antrieb 3 dient hier der Einstellung unterschiedlicher Funktionszustände des Kraftfahrzeugschlosses, was weiter unten im Detail erläutert wird. In Fig. 1 ist der Antrieb 3 mit einem Antriebsgehäuse 3a gezeigt, was für die vorschlagsgemäße Lösung aber nicht unbedingt vorgesehen sein muss.

Der Antrieb 3 weist einen dem Stellelement 2 zugeordneten Rotor 4 und einen Ständer 5 auf, wobei der Ständer 5 eine Spulenanordnung 6 und mindestens zwei der Spulenanordnung 6 zugeordnete magnetleitende Pole 7-10 zum Leiten des von der Spulenanordnung 6 erzeugten Magnetfelds aufweist. Die Pole 7-10 bilden jeweils, ggf. in Abhängigkeit von der Rotorstellung, mit dem Rotor 4 einen bezogen auf die geometrische Rotorachse 4a axialen Luftspalt 11a, 11b aus. Der Begriff "axialer Luftspalt" wurde weiter oben erläutert.

Dem Antrieb 3 des Kraftfahrzeugschlosses kommt damit vorschlagsgemäß die grundsätzliche Struktur eines Axialflussmotors zu. Mit dem für die Erzeugung von Antriebsmomenten maßgeblichen, bezogen auf die geometrische Rotorachse 4a axialen magnetischen Arbeitsfeld lassen sich bei kompakter Bauart vergleichsweise hohe Drehmomente erzeugen.

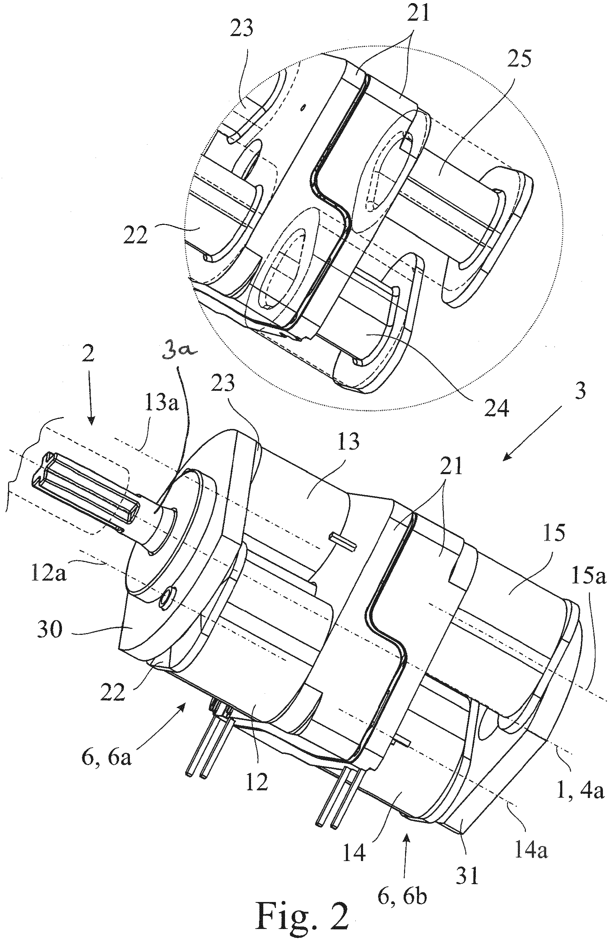

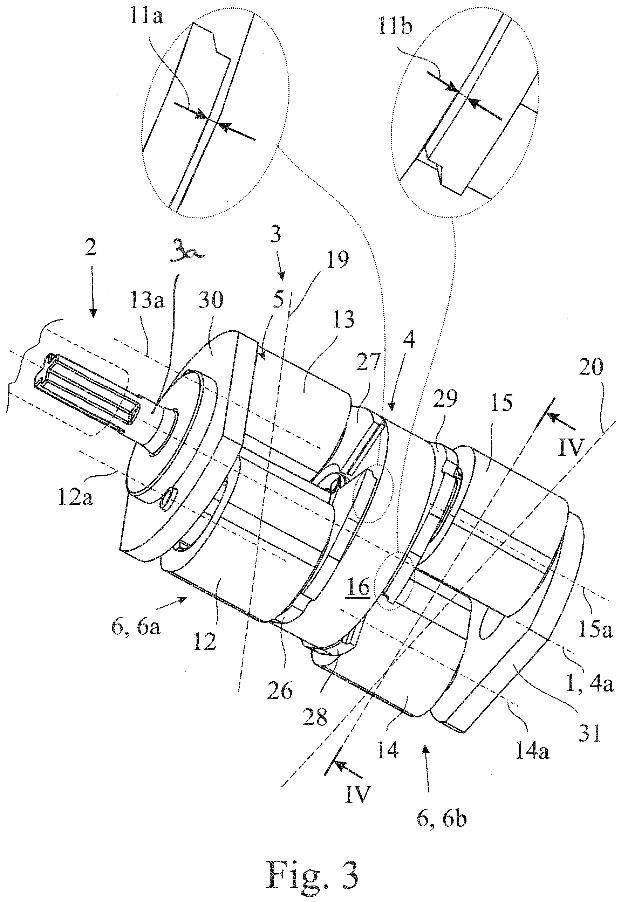

Eine Zusammenschau der Fig. 2 und 3 zeigt, dass die Spulenanordnung 6 mittels des Rotors 4 zweigeteilt ausgestaltet ist. Dabei ist es so, dass ein erster Abschnitt 6a der Spulenanordnung 6 mit mindestens einer Spule 12,13, vorzugsweise mindestens zwei Spulen 12,13, und ein zweiter Abschnitt 6b der Spulenanordnung 6 mit mindestens einer Spule 14, 15, vorzugsweise mit mindestens zwei Spulen 14,15, bezogen auf die geometrische Rotorachse 4a axial zueinander versetzt und entlang der geometrischen Rotorachse 4a auf gegenüberliegenden Seiten des Rotors 4 angeordnet sind. Dabei ist es hier und vorzugsweise so, dass der erste Abschnitt 6a der Spulenanordnung 6 und der zweite Abschnitt 6b der Spulenanordnung 6, jeweils vollständig, entlang der geometrischen Rotorachse 4a auf gegenüberliegenden Seiten des Rotors 4 angeordnet sind.

Es ergibt sich unmittelbar aus der Darstellung gemäß Fig. 2, dass verglichen mit einer Anordnung, bei der alle Spulen 12-15 der Spulenanordnung 6 auf einer Seite des Rotors 4 angeordnet sind, weitaus mehr Bauraum für die Realisierung der Spulen 12-15 vorhanden ist.

Die Ausdehnung des Antriebs 3 in bezogen auf die geometrische Rotorachse 4a radialer Richtung ist vorteilhafterweise gering. Bei dem dargestellten Ausführungsbeispiel liegt dies daran, dass die Spulenanordnung 6 ausschließlich auf den beiden entlang der geometrischen Rotorachse 4a gegenüberliegenden Seiten des Rotors 4 angeordnet ist, und nicht etwa seitlich des Rotors 4. Der Begriff "seitlich" entspricht hier einem bezogen auf die geometrische Rotorachse 4a radialen Versatz.

Die beiden Abschnitte 6a, 6b der Spulenanordnung 6 sind jeweils geringfügig in Richtung der geometrischen Rotorachse 4a von dem Rotor 4 beabstandet. Die beiden Abschnitte 6a, 6b der Spulenanordnung 6 erstrecken sich dabei in entgegengesetzten, bezogen auf die geometrische Rotorachse 4a axialen Richtungen.

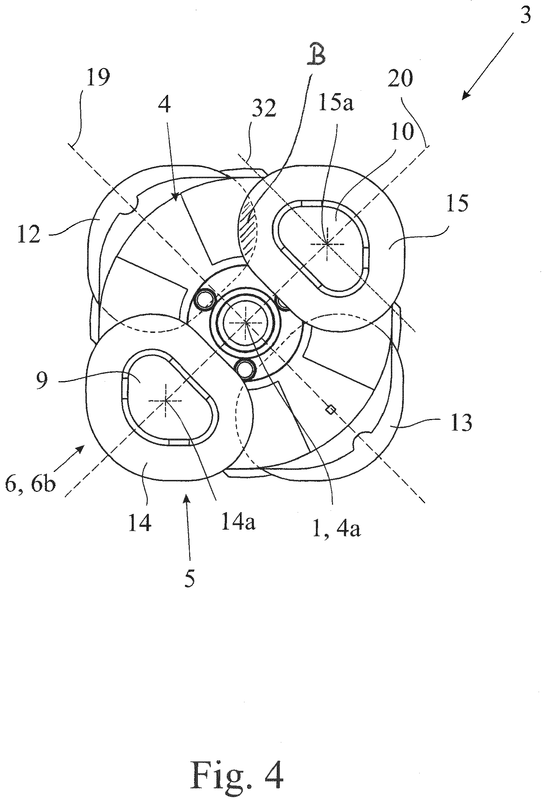

Fig. 4 zeigt am besten, dass bei dem dargestellten Ausführungsbeispiel mindestens eine Spule 12,13 des ersten Abschnitts 6a der Spulenanordnung 6 bezogen auf die geometrische Rotorachse 4a winkelversetzt zu den Spulen 14,15 des zweiten Abschnitts 6b der Spulenanordnung 6 angeordnet ist bzw. sind. Damit ist mindestens eine Spule 12,13 des ersten Abschnitts 6a der Spulenanordnung 6 vorgesehen, die entsprechend winkelversetzt zu allen auf der gegenüberliegenden Seite des Rotors 4 angeordneten Spulen 14,15 des zweiten Abschnitts 6b der Spulenanordnung 6 ist. Hier und vorzugsweise sind alle Spulen 12,13 des ersten Abschnitts 6a der Spulenanordnung 6 entsprechend zueinander winkelversetzt angeordnet.

Entsprechend der Zweiteilung der Spulenanordnung 6 sind auch die der Spulenanordnung 6 zugeordneten Pole 7-10 auf gegenüberliegenden Seiten des Rotors 4 angeordnet. Entsprechend sind die der Spulenanordnung 6 zugeordneten magnetleitenden Pole 7,8; 9,10 entlang der geometrischen Rotorachse 4a auf gegenüberliegenden Seiten des Rotors 4 angeordnet. Dadurch bilden die Pole 7-10, ggf. in Abhängigkeit von der Rotorstellung, beidseitig des Rotors 4 mit dem Rotor 4 bezogen auf die geometrische Rotorachse 4a axiale Luftspalte 11a, 11b aus.

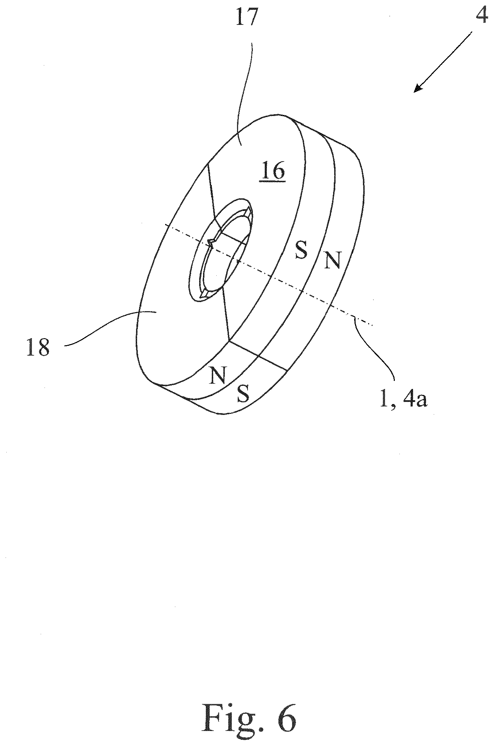

Fig. 3 zeigt ferner, dass der Rotor 4 eine Permanentmagnetanordnung 16 aufweist, die hier und vorzugsweise bezogen auf die geometrische Rotorachse 4a axial magnetisiert ist. Die axiale Magnetisierung ist in Fig. 6 angedeutet.

Der Rotor 4 ist, wie ebenfalls der Darstellung gemäß Fig. 6 zu entnehmen ist, im Wesentlichen scheibenförmig ausgestattet. Er weist hier und vorzugsweise genau zwei Scheibensegmente 17,18 auf, die abwechselnd entgegengesetzt magnetisiert sind. Grundsätzlich können auch mehr als zwei Scheibensegmente 17,18, weiter vorzugsweise mehr als drei Scheibensegmente 17,18, vorgesehen sein. Die Scheibensegmente 17,18 können beliebig geformt und insbesondere als Ringsegmente ausgestaltet sein.

Grundsätzlich kann es vorgesehen sein, dass sich die Scheibensegmente 17,18 bezogen auf die geometrische Rotorachse 4a jeweils über unterschiedliche Winkelbeträge erstrecken. Hier und vorzugsweise ist es allerdings so, dass sich die Scheibensegmente 17,18 bezogen auf die geometrische Rotorachse 4a jeweils über denselben Winkelbetrag erstrecken.

Durch die vorschlagsgemäße, beidseitige Anordnung der Spulen 12-15 ergibt sich die Möglichkeit, dass in Richtung der geometrischen Rotorachse 4a gesehen zumindest ein Teil der Spulen 12-15 der beiden Abschnitte 6a der Spulenanordnung 6 einander überlappen. Dies lässt sich der Darstellung gemäß Fig. 4 entnehmen. Daraus ergibt sich die oben angesprochene Flexibilität bei der Auslegung der Spulen 12-15 in Form und Größe. Ein Überlappungsbereich ist in Fig. 4 beispielhaft schraffiert und mit dem Bezugszeichen B versehen worden. Dadurch, dass die Spulen 12-15 in bezogen auf die geometrische Rotorachse 4a axial versetzt angeordnet sind, kommt es hier trotz des obigen Überlappens zu keiner Kollision zwischen den Spulen 12-15.

Die Spulenanordnung 6 kann grundsätzlich eine unterschiedliche Anzahl von Spulen 12-15 aufweisen. Angesichts der Tatsache, dass für das vorschlagsgemäße Kraftfahrzeugschloss nicht mehr als acht Antriebsstellungen anzufahren sind, hat sich die Ausstattung der Spulenanordnung 6 bei der noch zu erläuternden Ansteuerung mit insgesamt vier Spulen als vorteilhaft herausgestellt. Dabei ist es so, dass der erste Abschnitt 6a der Spulenanordnung 6 genau zwei Spulen 12,13 aufweist, während der zweite Abschnitt 6b der Spulenanordnung 6 ebenfalls genau zwei Spulen 14,15 aufweist. Wie der Zeichnung zu entnehmen ist, kann die Spulenanordnung 6 zusätzliche Spulen aufnehmen. Beispielsweise kann es vorgesehen sein, dass die beiden Abschnitte 6a, 6b der Spulenanordnung 6 jeweils genau drei Spulen aufweisen.

Dadurch, dass das von der Spulenanordnung 6 erzeugte Magnetfeld über die Pole 7-10 geführt wird, können die Spulen 12-15 grundsätzlich unterschiedlich ausgerichtet sein. Hier und vorzugsweise ist es allerdings so, dass die Spulen 12-15 der Spulenanordnung 6 mit ihren jeweiligen Spulenachsen 12a-15a parallel zu der geometrischen Rotorachse 4a ausgerichtet sind. Dies kann grundsätzlich auch nur für einen Teil der Spulen 12-15 vorgesehen sein.

Alternativ oder zusätzlich ist es vorzugsweise so, dass mindestens einer der beiden Abschnitte 6a, 6b der Spulenanordnung 6 mindestens ein Spulenpaar aus zwei Spulen 12,13; 14,15 aufweist, deren Spulenachsen 12a, 13a; 14a, 15a auf einer durch die geometrische Rotorachse 4a verlaufenden Verbindungslinie 19,20 liegen. Hier und vorzugsweise ist es vorgesehen, dass die beiden Abschnitte 6a, 6b der Spulenanordnung 6 jeweils ein Spulenpaar aus zwei Spulen 12, 13; 14, 15 aufweisen, deren Spulenachsen 12a, 13a; 14a, 15a auf einer durch die geometrische Rotorachse verlaufenden Verbindungslinie 19, 20 liegen, wobei die resultierenden Verbindungslinien 19, 20 der beiden gegenüberliegenden Spulenpaare bezogen auf die geometrische Rotorachse 4a in einem Winkel von etwa 90° zueinander stehen. Dies lässt sich der Darstellung gemäß Fig. 4 entnehmen. Je nach Anwendungsfall kann es auch vorteilhaft sein, dass die resultierenden Verbindungslinien 19, 20 bezogen auf die geometrische Rotorachse 4a in einem anderen Winkel, insbesondere in einem Winkel von etwa 45°, zueinander stehen.

Es ergibt sich aus einer Zusammenschau der Fig. 3 und 4, dass die Spulen 12,13 des ersten Abschnitts 6a der Spulenanordnung 6 relativ zueinander bezogen auf die geometrische Rotorachse 4a dieselbe Winkellage aufweisen, wie die Spulen 14, 15 des zweiten Abschnitts 6b der Spulenanordnung 6. Hier und vorzugsweise ist es sogar so, dass die beiden Abschnitte 6a, 6b der Spulenanordnung 6 identisch zueinander ausgestaltet sind.

Damit ist bei dem dargestellten und insoweit bevorzugten Ausführungsbeispiel der erste Abschnitt 6a der Spulenanordnung 6 bezogen auf die geometrische Rotorachse 4a winkelversetzt zu dem zweiten Abschnitt 6b der Spulenanordnung 6 angeordnet. Vorzugsweise handelt es sich hier, wie oben im Zusammenhang mit den Spulenpaaren angedeutet, um einen Winkelversatz um vorzugsweise etwa 90°, insbesondere um einen Winkelversatz von etwa 45°.

Jedem Pol 7-10 ist mindestens eine Spule 12-15, hier und vorzugsweise genau eine Spule 12-15, zugeordnet. Dabei ist es weiter vorzugsweise so, dass jeder Pol 8-10 auf die Spulenachse 12a-15a einer dem jeweiligen Pol 7-10 zugeordneten Spule 12-15 ausgerichtet ist. Es lässt sich einer Zusammenschau der Fig. 3-5 entnehmen, dass jeder Pol 7-10 hier durch eine zugeordnete Spule 12-15 hindurchläuft.

Grundsätzlich kann es auch vorteilhaft sein, dass jedem Pol 8-10 mehrere Spulen 12-15 zugeordnet sind oder das eine Spule 12-15 mehreren Polen 8-10 zugeordnet ist.

Fig. 2 zeigt, dass der Antrieb 3 ein Rotorgehäuse 21 aufweist, das den Rotor 4 im Wesentlichen aufnimmt. Interessant dabei ist die Tatsache, dass das Rotorgehäuse 21 zusätzlich für jeden Pol 7-10 ein Polgehäuse 22-25 bereitstellt. Das Polgehäuse 22-25 stellt eine elektrische Isolierung zwischen den Spulen 12-15 und den Polen 7-10 bereit.

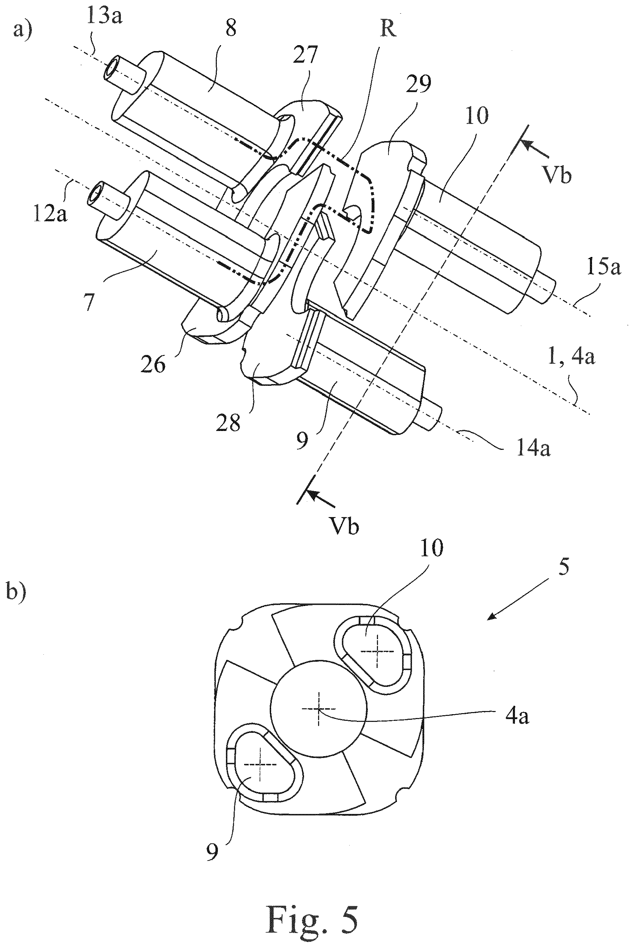

Besonders interessant und insoweit bevorzugt ist die dargestellte Ausgestaltung der Pole 7-10. Jeder Pol 7-10 weist einen Polschuh 26-29 auf, der zur Ausbildung des jeweiligen Luftspalts 11a, 11b dem Rotor 4 zugewandt ist. Die Form der Polschuhe 26-29 ergibt sich am besten aus einer Zusammenschau der Fig. 4 und 5. Fig. 5a und 5b zeigen, dass in Richtung der geometrischen Rotorachse 4a gesehen zumindest ein Teil der den beiden Abschnitten 6a, 6b der Spulenanordnung 6 zugeordneten Polschuhe 26-29 einander überlappen. Dies ist hier und vorzugsweise dadurch realisiert, dass die Polschuhe 26-29 zumindest über einen Winkelbereich um die geometrische Rotorachse 4a herum verlaufen.

Dadurch, dass die Polschuhe 26-29 in bezogen auf die geometrische Rotorachse 4a axial versetzt angeordnet sind, kommt es hier trotz des obigen Überlappens zu keiner Kollision zwischen den Polschuhen 26-29.

Die Anordnung und Ausgestaltung der Polschuhe 26-29 ist nun so getroffen, dass ein Polschuh 26-29 eines Pols 7-10 eines Abschnitts 6a der Spulenanordnung 6 als Rückschlusselement für zwei Polschuhe 26-29 des jeweils anderen Abschnitts 6b der Spulenanordnung 6 dient. Fig. 5a zeigt beispielhaft den Feldverlauf R, bei dem die magnetischen Feldlinien über den Pol 7, den Polschuh 26, den Polschuh 29, den Polschuh 27 und den Pol 8 verlaufen. Daraus ergibt sich, dass jeder Polschuh 26-29 als Rückschlusselement für das magnetische Feld des jeweils gegenüberliegenden Abschnitts 6a, 6b der Spulenanordnung 6 dienen kann. Die Pole 7-10 sind mindestens paarweise über eine magnetische Leitanordnung magnetisch miteinander gekoppelt. Hier und vorzugsweise ist es so, dass die Pole 7,8; 9,10 paarweise über Rückschlussbleche 30,31 miteinander magnetisch gekoppelt sind.

Der Antrieb weist eine Antriebswelle 3a auf, die mit dem Stellelement 2 antriebstechnisch gekoppelt ist. Die Antriebswelle 3a ist wiederum mit dem Rotor 4 antriebstechnisch gekoppelt und erstreckt sich hier und vorzugsweise zumindest durch den ersten Abschnitt 6a der Spulenanordnung 6 hindurch.

Bei dem dargestellten und insoweit bevorzugten Ausführungsbeispiel sind die Spulen 12-15 der beiden Abschnitte 6a, 6b der Spulenanordnung 6 als Gleichteile ausgestaltet. Ferner sind hier und vorzugsweise die Pole 7-10 der beiden Abschnitte 6a, 6b der Spulenanordnung 6 als Gleichteile ausgestaltet. Schließlich sind hier und vorzugsweise die Rückschlussbleche 30, 31 der beiden Abschnitte 6a, 6b der Spulenanordnung 6 als Gleichteile ausgestaltet. Die Ausgestaltung der betreffenden Komponenten als Gleichteile hat insbesondere fertigungstechnische Vorteile.

Eine besonders gute Ausnutzung des vorhandenen Bauraums ergibt sich hier und vorzugsweise dadurch, dass die Spulen 12-15 und/oder Pole 7-10 von einer im Querschnitt senkrecht zu der geometrischen Rotorachse 4a kreisförmigen Ausgestaltung abweichen. Dabei ist es vorzugsweise so, dass die Spulen 12-15 und/oder die Pole 7-10 zumindest abschnittsweise im Querschnitt zu der geometrischen Rotorachse 4a länglich, insbesondere im Wesentlich elliptisch oder, wie in Fig. 4 dargestellt, im Wesentlichen dreieckig, ausgestaltet sind. Dabei sind die Spulen 12-15 bzw. Pole 7-10 mit ihrer länglichen Erstreckung bezogen auf die geometrische Rotorachse 4a im Wesentlichen tangential angeordnet. Dies lässt sich der Darstellung gemäß Fig. 4 entnehmen, in der die im Querschnitt längliche Erstreckung der Spule 13 und des Pols 8 mit dem Bezugszeichen 32 angedeutet ist.

Wie schon angedeutet dient der Antrieb 3 der Einstellung verschiedener Funktionszustände des Kraftfahrzeugschlosses. Hierfür weist das Kraftfahrzeugschloss zunächst eine Schlossmechanik 33 auf, die in unterschiedliche Funktionszustände wie "verriegelt", "entriegelt", "diebstahlgesichert", "verriegelt-kindergesichert" und "entriegelt-kindergesichert" bringbar ist. Die Bedeutung dieser Funktionszustände für die Möglichkeit des Öffnens der Kraftfahrzeugtür o. dgl. von innen und von außen wurde im allgemeinen Teil der Beschreibung erläutert. In diesem Zusammenhang darf darauf hingewiesen werden, dass die Schlossmechanik 33 mittels des Antriebs 3 in jede beliebige Auswahl der obigen Funktionszustände bringbar ist. Insbesondere kann es vorgesehen sein, dass die Schlossmechanik 33 mittels des Antriebs 3 nur in die Funktionszustände "verriegelt" und "entriegelt" bringbar ist. Denkbar ist weiter, dass zusätzlich zu den beiden letztgenannten Funktionszuständen der Funktionszustand "diebstahlgesichert" mittels des Antriebs 3 einstellbar ist.

Hier und vorzugsweise ist das Stellelement 2, insbesondere die Steuerwelle 2, mittels des Antriebs 3 in mindestens zwei Steuerstellungen bringbar, um Funktionszustände der Schlossmechanik 33 wie "verriegelt", "entriegelt", "diebstahlgesichert", "verriegelt-kindergesichert" und "entriegelt-kindergesichert" einzustellen. Vorzugsweise ist es so, dass jede Steuerstellung des Stellelements 2 einem Funktionszustand der Schlossmechanik 33 entspricht, sodass für die Einstellung des jeweiligen Funktionszustands das Stellelement 2 in die entsprechende Steuerstellung zu bringen ist.

Zur Einstellung der verschiedenen Funktionszustände ist die Schlossmechanik 33 mit einem verstellbaren Funktionselement 34 ausgestattet, wobei das Stellelement 2 direkt oder indirekt in antriebstechnischem Eingriff mit dem Funktionselement 34 steht oder bringbar ist. Zur Klarstellung darf darauf hingewiesen werden, dass der antriebstechnische Eingriff auch über eine beliebige Anzahl von Getriebeelementen realisiert sein kann. Grundsätzlich kann es aber auch vorgesehen sein, dass das Stellelement 2 Bestandteil des Funktionselements 34 ist.

Vorzugsweise ist es so, dass sich das Funktionselement 34 an einem Steuerabschnitt 35 der Steuerwelle 2 abstützt. Je nach Stellung der Steuerwelle 2 verstellt sich das Funktionselement 34 im Wesentlichen senkrecht zu der Stellelementachse 1, wie Fig. 1 durch den Bewegungspfeil 36 und durch die gestrichelte Darstellung des Funktionselements 34 dargestellt ist. Der Steuerabschnitt 35 ist vorzugsweise wie in Fig. 1 dargestellt mit einer Nocke 35a ausgestattet, auf der sich das Funktionselement 34 entsprechend abstützt. Je nach Stellung der Steuerwelle 2 führt die Abstützung des Funktionselements 34 an der Nocke 35a zu einer resultierenden Auslenkung des Funktionselements 34 in Richtung des Bewegungspfeils 36.

Die Steuerwelle 2 lässt sich mittels des Antriebs 3 in mindestens zwei Steuerstellungen, hier und vorzugsweise in insgesamt fünf Steuerstellungen, bringen, um die Funktionszustände des Kraftfahrzeugschlosses, hier die Funktionszustände "verriegelt", "entriegelt", "diebstahlgesichert", "verriegelt-kindergesichert" und "entriegelt-kindergesichert" einstellen zu können.

Besonders einfach gestaltet sich der Aufbau des vorschlagsgemäßen Kraftfahrzeugschlosses dadurch, dass das Funktionselement 34 als Draht ausgestaltet ist und in unterschiedliche Funktionsstellungen entlang des Bewegungspfeils 36 auslenkbar ist. Grundsätzlich ist es auch denkbar, dass das Funktionselement 34 als Streifen ausgestaltet ist. Hier und vorzugsweise ist es weiter so, dass das Funktionselement 34 als federelastischer Draht oder Streifen ausgestaltet ist, und so als Biege-Funktionselement in die unterschiedlichen Funktionsstellungen bringbar ist.

Im Folgenden wird die Funktionsweise des Kraftfahrzeugschlosses in den Funktionszuständen "entriegelt" und "entriegelt-kindergesichert" erläutert. Im Übrigen darf zur Erläuterung der grundsätzlichen Funktionsweise des Kraftfahrzeugschlosses mit federelastischem Funktionselement 34 auf die internationale Patentanmeldung WO 2009/040074 A1 verwiesen werden, die auf die Anmelderin zurückgeht.

Im Funktionszustand "entriegelt" steht das Funktionselement 34 in seiner in Fig. 1 unteren, in durchgezogener Linie dargestellten Stellung. Damit befindet sich das Funktionselement 34 im Bewegungsbereich eines Innenbetätigungshebels 37, der im montierten Zustand mit einem Türinnengriff gekoppelt ist, sowie im Bewegungsbereich eines Außenbetätigungshebels 38, der im montierten Zustand mit einem Türaußengriff gekoppelt ist. Eine Verstellung des Innenbetätigungshebels 37 oder des Außenbetätigungshebels 38 in Richtung des Bewegungspfeils 39 führt dazu, dass das Funktionselement 34 senkrecht zu seiner Erstreckung der Bewegung des jeweiligen Hebels 37, 38 folgt, auf die in Fig. 1 nur angedeutete Sperrklinke 40 trifft und diese wiederum in Richtung des Bewegungspfeils 39 mitnimmt und aushebt.

Eine Verstellung der Steuerwelle 2 in Richtung des Bewegungspfeils 41 um 90°aus der in Fig. 1 dargestellten Stellung heraus führt zur Einstellung des Funktionszustands "entriegelt-kindergesichert". In diesem Zustand befindet sich das Funktionselement 34 in der in Fig. 1 in gestrichelter Linie dargestellten Stellung. Eine Verstellung des Innenbetätigungshebels 37 in Richtung des Bewegungspfeils 39 hat damit keine Auswirkung auf das Funktionselement 34 und die Sperrklinke 40. Das Funktionselement 34 befindet sich allerdings noch im Bewegungsbereich des Außenbetätigungshebels 38, sodass ein Ausheben der Sperrklinke 40 und damit ein Öffnen der Kraftfahrzeugtür über den Außenbetätigungshebel 38 und damit über den Türaußengriff möglich ist.

Analog zu der Einstellung zu der oben beschriebenen Funktionszustände "entriegelt" und "entriegelt-kindergesichert" lassen sich auf alle anderen oben angesprochenen Funktionszustände allein durch eine entsprechende der Steuerwelle 2 umsetzen. Der Antrieb 3 ist dazu ausgelegt, alle Funktionszustände entsprechend anzufahren.

Im Hinblick auf die Verstellung des Stellelements 2 arbeitet der Antrieb 3 vorzugsweise als Direktantrieb, da zwischen dem Stellelement 2 und dem Antrieb 3 auf jegliche Getriebekomponenten verzichtet worden ist. Hier und vorzugsweise ist der Antrieb 3 mechanisch nicht selbsthemmend ausgestaltet, was eine unproblematische manuelle Einstellung von Funktionszuständen des Kraftfahrzeugschlosses ermöglicht.

Der Auslegung der Spulenanordnung 6, insbesondere der Auslegung und Anordnung der Spulen 12-15, kommt vorliegend ganz besondere Bedeutung zu. Vorliegend weist die Spulenanordnung 6 mindestens zwei, hier genau zwei, Spulenpaare 12, 13; 14, 15 auf, die zumindest auch paarweise angesteuert werden. Weiter vorzugsweise ist es so, dass der erste Abschnitt 6a der Spulenanordnung 6 mindestens ein Spulenpaar 12,13, hier und vorzugsweise genau ein Spulenpaar 12, 13, und der zweite Abschnitt 6b, der Spulenanordnung 6 mindestens einen Spulenpaar 14, 15, hier und vorzugsweise genau ein Spulenpaar 14, 15, aufweist, die jeweils paarweise angesteuert werden. Dabei ist es weiter vorzugsweise so, dass die beiden Spulen 12, 13; 14, 15 eines Spulenpaars elektrisch gekoppelt, vorzugsweise in Reihe oder parallel geschaltet, sind.

Interessant bei dem vorschlagsgemäßen Antrieb 3 ist vor allem die Tatsache, dass durch unterschiedliche stationäre Bestromung der Spulenanordnung 6 und die mit der Bestromung einhergehende magnetische Wechselwirkung zwischen Rotor 4 und Ständer 5 mindestens zwei magnetisch stabile Antriebsstellungen des Rotors 4, vorzugsweise mindestens drei magnetisch stabile Antriebsstellungen des Rotors 4, weiter vorzugsweise mehr als drei magnetisch stabile Antriebsstellungen des Rotors 4, erzeugbar sind. Grundsätzlich sind hier sogar insgesamt acht magnetisch stabile Antriebsstellungen des Stellelements 2 erzeugbar.

Im Sinne der oben angesprochenen Auslegung des Begriffs "stationäre Bestromung" wird die Bestromung lediglich aufgeschaltet, und nicht etwa im Hinblick auf einen bestimmten Bewegungsablauf o. dgl. geregelt. Es wurde auch schon erläutert, dass der Begriff "magnetisch stabile Antriebsstellung" vorliegend bedeutet, dass während der Bestromung der Rotor 4 durch magnetische Anziehungs- bzw. Abstoßungskräfte stets in die entsprechende Antriebsstellung drängt, und zwar unabhängig von der Richtung einer von außen einwirkenden Auslenkkraft. Dies bedeutet, dass ein Anfahren der Antriebsstellungen, die den entsprechenden Steuerstellungen des Stellelements 2 entsprechen, ohne die Notwendigkeit eines Endanschlags o. dgl. erfolgen kann. Das ist verschleiß-und geräuschreduzierend und vereinfacht die mechanische Konstruktion.

Vorzugsweise ist es so, dass durch Bestromung der Spulen 12-15 der Spulenanordnung 6 in einer der jeweiligen Antriebsstellung zugeordneten Spulenkombination in einer der jeweiligen Antriebstellung zugeordneten Bestromungsrichtung mindestens zwei magnetisch stabile Antriebsstellungen des Rotors 4, vorzugsweise mindestens drei magnetisch stabile Antriebsstellungen des Rotors 4, weiter vorzugsweise mehr als drei magnetisch stabile Antriebsstellungen des Rotors 4, erzeugbar sind. Die angefahrene Antriebsstellung ergibt sich ausschließlich aus der bestromten Spulenkombination sowie der Bestromungsrichtung. Dies ermöglicht eine besonders einfache Auslegung einer der Spulenanordnung 6 zugeordneten Steuerungseinrichtung.

Vorzugsweise ist es so, dass mindestens eine magnetisch stabile Antriebsstellung einer oben angesprochenen Steuerstellung des Stellelements 2 zur Einstellung eines Funktionszustands der Schlossmechanik 33 wie "verriegelt", "entriegelt", "diebstahlgesichert", "verriegelt-kindergesichert" und "entriegelt-kindergesichert" ist. Dabei ist es von besonderer Bedeutung, dass zwischen den Antriebsstellungen, die jeweils einer Steuerstellung des Stellelements 2 entsprechen, keine weiteren Antriebsstellungen vorgesehen sind. Damit lassen sich die jeweiligen Antriebsstellungen direkt anfahren, ohne dass mehrere Zwischenschritte über dazwischenliegende Antriebsstellungen notwendig sind.

Nach einer weiteren Lehre, der ebenfalls eigenständige Bedeutung zukommt, wird ein Verfahren zur Ansteuerung eines vorschlagsgemäßen Kraftfahrzeugschlosses beansprucht. Wesentlich nach diesem Verfahren ist, dass die Spulenanordnung 6 für das Anfahren von mindestens zwei magnetisch stabilen Antriebsstellungen des Rotors 4, vorzugsweise mindestens drei magnetisch stabilen Antriebsstellungen des Rotors 4 und weiter vorzugsweise mehr als drei magnetisch stabilen Antriebsstellungen des Rotors 4, unterschiedlich stationär bestromt wird. Auf alle obigen, die Ansteuerung des vorschlagsgemäßen Kraftfahrzeugschlosses betreffenden Ausführungen darf verwiesen werden.

Es darf darauf hingewiesen werden, dass der vorschlagsgemäße Antrieb 3 innerhalb des Kraftfahrzeugschlosses in ganz unterschiedlicher Weise genutzt werden kann. Neben der Einstellung von Funktionszuständen kann der Antrieb 3 beispielsweise zum motorischen Ausheben der Sperrklinke 40 genutzt werden, da hierfür nur kleine Betätigungswege erforderlich sind.

Schließlich darf noch zur Klarstellung darauf hingewiesen werden, dass die Komponenten des Kraftfahrzeugschlosses nicht notwendigerweise in ein und demselben Gehäuse untergebracht sein müssen. Insbesondere kann es vorteilhaft sein, den Antrieb 3 in einem von dem Kraftfahrzeugschloss im Übrigen getrennt ausgestalteten Gehäuse vorzusehen, sodass das Kraftfahrzeugschloss insoweit verteilt angeordnet ist.

## Patentansprüche

1. Kraftfahrzeugschloss mit einem Stellelement (2), insbesondere einer Steuerwelle, und einem Antrieb (3) zur Verstellung des Stellelements (2), wobei der Antrieb (3) einen Rotor (4) und einen Ständer (5) aufweist, wobei der Ständer (5) eine Spulenanordnung (6) und mindestens zwei der Spulenanordnung (6) zugeordnete magnetleitende Pole (7-10) zum Leiten des von der Spulenanordnung (6) erzeugten Magnetfelds aufweist,
**dadurch gekennzeichnet,**
**dass** die Pole (7-10) jeweils, ggf. in Abhängigkeit von der Rotorstellung, mit dem Rotor (4) einen bezogen auf die geometrische Rotorachse (4a) axialen Luftspalt (11a/11b) ausbilden, dass ein erster Abschnitt (6a) der Spulenanordnung (6) mit mindestens einer Spule (12, 13) und ein zweiter Abschnitt (6b) der Spulenanordnung (6) mit mindestens einer Spule (14, 15) bezogen auf die geometrische Rotorachse (4a) axial zueinander versetzt und entlang der geometrischen Rotorachse (4a) auf gegenüberliegenden Seiten des Rotors (4) angeordnet sind.

2. Kraftfahrzeugschloss nach Anspruch 1, **dadurch gekennzeichnet, dass** mindestens eine Spule (12, 13) des ersten Abschnitts (6a) der Spulenanordnung (6) bezogen auf die geometrische Rotorachse (4a) winkelversetzt zu der mindestens einen Spule (14, 15) des zweiten Abschnitts (6b) der Spulenanordnung (6) angeordnet ist bzw. sind, und/oder, dass die der Spulenanordnung (6) zugeordneten magnetleitenden Pole (7-10) entlang der geometrischen Rotorachse (4a) auf gegenüberliegenden Seiten des Rotors (4) angeordnet sind und so, ggf. in Abhängigkeit von der Rotorstellung, beidseitig des Rotors (4) mit dem Rotor (4) bezogen auf die geometrische Rotorachse (4a) axiale Luftspalte (11a, 11b) ausbilden.

3. Kraftfahrzeugschloss nach einem der vorhergehenden Ansprüche, **dadurch gekennzeichnet, dass** in Richtung der geometrischen Rotorachse (4a) gesehen zumindest ein Teil der Spulen (12-15) der beiden Abschnitte (6a, 6b) der Spulenanordnung (6) einander überlappen.

4. Kraftfahrzeugschloss nach einem der vorhergehenden Ansprüche, **dadurch gekennzeichnet, dass** zumindest ein Teil der Spulen (12-15) der Spulenanordnung (6) mit ihren jeweiligen Spulenachsen (12a-15a) parallel zu der geometrisehen Rotorachse (4a) ausgerichtet sind, und/oder, dass mindestens einer der beiden Abschnitte (6a, 6b) der Spulenanordnung (6) mindestens ein Spulenpaar aus zwei Spulen (12-15) aufweist, deren Spulenachsen (12a-15a) auf einer durch die geometrische Rotorachse (4a) verlaufenden Verbindungslinie (19, 20) liegen, vorzugsweise, dass die beiden Abschnitte (6a, 6b) der Spulenanordnung (6) jeweils ein Spulenpaar aus zwei Spulen (12, 13; 14, 15) aufweisen, deren Spulenachsen (12a, 13a; 14a, 15a) jeweils auf einer durch die geometrische Rotorachse (4a) verlaufenden Verbindungslinie (19, 20) liegen und dass die Verbindungslinien (19, 20) der beiden gegenüberliegenden Spulenpaare bezogen auf die geometrische Rotorachse (4a) in einem Winkel von etwa 45° oder in einem Winkel von etwa 90° zueinander stehen.

5. Kraftfahrzeugschloss nach einem der vorhergehenden Ansprüche, **dadurch gekennzeichnet, dass** die Spulen (12, 13) des ersten Abschnitts (6a) der Spulenanordnung (6) relativ zueinander bezogen auf die geometrische Rotorachse (4a) dieselbe Winkellage aufweisen wie die Spulen (14, 15) des zweiten Abschnitts (6b) der Spulenanordnung (6).

6. Kraftfahrzeugschloss nach einem der vorhergehenden Ansprüche, **dadurch gekennzeichnet, dass** der erste Abschnitt (6a) der Spulenanordnung (6) bezogen auf die geometrische Rotorachse (4a) winkelversetzt zu dem zweiten Abschnitt (6b) der Spulenanordnung (6) angeordnet ist, vorzugsweise, dass der erste Abschnitt (6a) der Spulenanordnung (6) bezogen auf die geometrische Rotorachse (4a) um etwa 45° oder um etwa 90° winkelversetzt zu dem zweiten Abschnitt (6b) der Spulenanordnung (6) angeordnet ist.

7. Kraftfahrzeugschloss nach einem der vorhergehenden Ansprüche, **dadurch gekennzeichnet, dass** jeder Pol (7-10) einen Polschuh (26-29) aufweist, der zur Ausbildung des jeweiligen Luftspalts (11a, 11b) dem Rotor (4) zugewandt ist, vorzugsweise, dass in Richtung der geometrischen Rotorachse (4a) gesehen zumindest ein Teil der den beiden Abschnitten (6a, 6b) der Spulenanordnung (6) zugeordneten Polschuhe (26-29) einander überlappen, vorzugsweise, dass die Polschuhe (26-29) zumindest über einen Winkelbereich um die geometrische Rotorachse (4a) herum verlaufen, weiter vorzugsweise, dass ein Polschuh (26-29) eines Pols (7-10) eines Abschnitts (6a, 6b) der Spulenanordnung (6) als Rückschlusselement für zwei Polschuhe (26-29) des jeweils anderen Abschnitts (6a,6b) der Spulenanordnung (6) dient.

8. Kraftfahrzeugschloss nach einem der vorhergehenden Ansprüche, **dadurch gekennzeichnet, dass** die Spulen (12-15) der beiden Abschnitte (6a, 6b) der Spulenanordnung (6) als Gleichteile ausgestaltet sind und/oder die Pole (7-10) der beiden Abschnitte (6a, 6b) der Spulenanordnung (6) als Gleichteile ausgestaltet sind und/oder die Rückschlussbleche (30, 31) der beiden Abschnitte (6a, 6b) der Spulenanordnung (6) als Gleichteile ausgestaltet sind.

9. Kraftfahrzeugschloss nach einem der vorhergehenden Ansprüche, **dadurch gekennzeichnet, dass** die Spulen (12-15) und/oder die Pole (7-10) zumindest abschnittsweise im Querschnitt senkrecht zu der geometrischen Rotorachse (4a) länglich, insbesondere im Wesentlichen elliptisch oder im Wesentlichen dreieckig, ausgestaltet sind und, vorzugsweise, mit ihrer länglichen Erstreckung (32) bezogen auf die geometrische Rotorachse (4a) im Wesentlichen tangential angeordnet sind.

10. Kraftfahrzeugschloss nach einem der vorhergehenden Ansprüche, **dadurch gekennzeichnet, dass** das Kraftfahrzeugschloss eine Schlossmechanik (33) aufweist, die in unterschiedliche Funktionszustände wie "verriegelt", "entriegelt", "diebstahlgesichert", "verriegelt-kindergesichert" und "entriegelt-kindergesichert" bringbar ist, und/oder, dass das Stellelement (2) mittels des Antriebs (3) in mindestens zwei Steuerstellungen bringbar ist, um Funktionszustände der Schlossmechanik (33) wie "verriegelt", "entriegelt", "diebstahlgesichert", "verriegelt-kindergesichert" und "entriegelt-kindergesichert" einzustellen.

11. Kraftfahrzeugschloss nach Anspruch 10, **dadurch gekennzeichnet, dass** zur Einstellung der verschiedenen Funktionszustände mindestens ein verstellbares Funktionselement (34) vorgesehen ist, wobei das Stellelement (2) in antriebstechnischem Eingriff mit dem Funktionselement (34) steht oder bringbar ist oder Bestandteil des Funktionselements (34) ist, vorzugsweise, dass das Funktionselement (34) als Draht oder Streifen ausgestaltet ist und in unterschiedliche Funktionsstellungen auslenkbar ist, vorzugsweise, dass das Funktionselement (34) als federelastischer Draht oder Streifen ausgestaltet ist und so als Biege-Funktionselement in unterschiedliche Funktionsstellungen biegbar ist.

12. Kraftfahrzeugschloss nach einem der vorhergehenden Ansprüche, **dadurch gekennzeichnet, dass** durch unterschiedliche stationäre Bestromung der Spulenanordnung (6) und die mit der Bestromung einhergehende magnetische Wechselwirkung zwischen Rotor (4) und Ständer (5) mindestens zwei magnetisch stabile Antriebsstellungen des Rotors (4), vorzugsweise mindestens drei magnetisch stabile Antriebsstellungen des Rotors (4), weiter vorzugsweise mehr als drei magnetisch stabile Antriebsstellungen des Rotors (4), erzeugbar sind, und/oder, dass durch Bestromung der Spulen (12-15) der Spulenanordnung (6) in einer der jeweiligen Antriebsstellung zugeordneten Spulenkombination in einer der jeweiligen Antriebsstellung zugeordneten Bestromungsrichtung mindestens zwei magnetisch stabile Antriebsstellungen des Rotors (4), vorzugsweise mindestens drei magnetisch stabile Antriebsstellungen des Rotors (4), weiter vorzugsweise mehr als drei magnetisch stabile Antriebsstellungen des Rotors (4), erzeugbar sind.

13. Kraftfahrzeugschloss nach Anspruch 10 und Anspruch 12, **dadurch gekennzeichnet, dass** mindestens eine magnetisch stabile Antriebsstellung eine Steuerstellung des Stellelements (2) zur Einstellung eines Funktionszustands der Schlossmechanik (33) wie "verriegelt", "entriegelt", "diebstahlgesichert", "verriegelt-kindergesichert" und "entriegelt-kindergesichert" ist.

14. Verfahren zur Ansteuerung eines Kraftfahrzeugschlosses nach einem der Ansprüche 1 bis 13, **dadurch gekennzeichnet, dass** die Spulenanordnung (6) für das Anfahren von mindestens zwei magnetisch stabilen Antriebsstellungen des Rotors (4), vorzugsweise mindestens drei magnetisch stabilen Antriebsstellungen des Rotors (4), weiter vorzugsweise mehr als drei magnetisch stabilen Antriebsstellungen des Rotors (4), unterschiedlich stationär bestromt wird, vorzugsweise, dass zum Anfahren von mindestens zwei magnetisch stabilen Antriebsstellungen die Spulen (12-15) der Spulenanordnung (6) in einer der jeweiligen Antriebsstellung zugeordneten Spulenkombination in einer der jeweiligen Antriebsstellung zugeordneten Bestromungsrichtung stationär bestromt werden.

## Claims

1. Motor vehicle lock having an actuating element (2), in particular a control shaft, and a drive (3) for adjusting the actuating element (2), wherein the drive (3) has a rotor (4) and a stator (5), wherein the stator (5) has a coil arrangement (6) and at least two magnetically conducting poles (7-10) which are assigned to the coil arrangement (6) and are intended for conducting the magnetic field generated by the coil arrangement (6),
**characterized**
**in that** the poles (7-10) each form, with the rotor (4), optionally depending on the rotor position, an axial airgap (11a/11b) with respect to the geometrical rotor axis (4a), in that a first section (6a) of the coil arrangement (6) with at least one coil (12, 13) and a second section (6b) of the coil arrangement (6) with at least one coil (14, 15) are offset axially with respect to each other with respect to the geometrical rotor axis (4a) and are arranged along the geometrical rotor axis (4a) on opposite sides of the rotor (4).

2. Motor vehicle lock according to Claim 1, **characterized in that** at least one coil (12, 13) of the first section (6a) of the coil arrangement (6) is arranged offset at an angle with respect to the geometrical rotor axis (4a) with respect to the at least one coil (14, 15) of the second section (6b) of the coil arrangement (6), and/or **in that** the magnetically conducting poles (7-10) assigned to the coil arrangement (6) are arranged along the geometrical rotor axis (4a) on opposite sides of the rotor (4) and thus, optionally depending on the rotor position, on both sides of the rotor (4) form axial airgaps (11a, 11b) with the rotor (4) with respect to the geometrical rotor axis (4a).

3. Motor vehicle lock according to either of the preceding claims, **characterized in that** at least a portion of the coils (12-15) of the two sections (6a, 6b) of the coil arrangement (6) overlap one another, as seen in the direction of the geometrical rotor axis (4a).

4. Motor vehicle lock according to one of the preceding claims, **characterized in that** at least a portion of the coils (12-15) of the coil arrangement (6) are directed with their respective coil axes (12a-15a) parallel to the geometrical rotor axis (4a), and/or in that at least one of the two sections (6a, 6b) of the coil arrangement (6) has at least one pair of coils consisting of two coils (12-15), the coil axes (12a-15a) of which lie on a connecting line (19, 20) running through the geometrical rotor axis (4a), preferably **in that** the two sections (6a, 6b) of the coil arrangement (6) each have a pair of coils consisting of two coils (12, 13; 14, 15), the coil axes (12a, 13a; 14a, 15a) of which each lie on a connecting line (19, 20) running through the geometrical rotor axis (4a), and **in that** the connecting lines (19, 20) of the two opposite pairs of coils are at an angle of approximately 45° or at an angle of approximately 90° to each other with respect to the geometrical rotor axis (4a).

5. Motor vehicle lock according to one of the preceding claims, **characterized in that** the coils (12, 13) of the first section (6a) of the coil arrangement (6) are at the same angular position relative to one another, with respect to the geometrical rotor axis (4a), as the coils (14, 15) of the second section (6b) of the coil arrangement (6).

6. Motor vehicle lock according to one of the preceding claims, **characterized in that** the first section (6a) of the coil arrangement (6) is arranged offset at an angle with respect to the geometrical rotor axis (4a) to the second section (6b) of the coil arrangement (6), preferably **in that** the first section (6a) of the coil arrangement (6) is arranged offset at an angle of approximately 45° or approximately 90° with respect to the geometrical rotor axis (4a) to the second section (6b) of the coil arrangement (6).

7. Motor vehicle lock according to one of the preceding claims, **characterized in that** each pole (7-10) has a pole shoe (26-29) which faces the rotor (4) in order to form the respective airgap (11a, 11b), preferably **in that**, as seen in the direction of the geometrical rotor axis (4a), at least a portion of the pole shoes (26-29) assigned to the two sections (6a, 6b) of the coil arrangement (6) overlap one another, preferably **in that** the pole shoes (26-29) run around the geometrical rotor axis (4a) at least over an angular region, furthermore preferably **in that** a pole shoe (26-29) of a pole (7-10) of a section (6a, 6b) of the coil arrangement (6) serves as a return element for two pole shoes (26-29) of the respectively other section (6a, 6b) of the coil arrangement (6).

8. Motor vehicle lock according to one of the preceding claims, **characterized in that** the coils (12-15) of the two sections (6a, 6b) of the coil arrangement (6) are configured as identical parts, and/or the poles (7-10) of the two sections (6a, 6b) of the coil arrangement (6) are configured as identical parts, and/or the return plates (30, 31) of the two sections (6a, 6b) of the coil arrangement (6) are configured as identical parts.

9. Motor vehicle lock according to one of the preceding claims, **characterized in that** the coils (12-15) and/or the poles (7-10) are at least partially configured in cross section perpendicular to the geometrical rotor axis (4a) to be elongate, in particular substantially elliptical or substantially triangular, and, preferably, are arranged with their elongate extent (32) substantially tangentially with respect to the geometrical rotor axis (4a).

10. Motor vehicle lock according to one of the preceding claims, **characterized in that** the motor vehicle lock has a lock mechanism (33) which can be brought into different functional states, such as "locked", "unlocked", "theftproof", "childproof locked" and "childproof unlocked", and/or **in that** the actuating element (2) can be brought by means of the drive (3) into at least two control positions in order to set functional states of the lock mechanism (33), such as "locked", ""unlocked", "theftproof", "childproof locked" and "childproof unlocked".

11. Motor vehicle lock according to Claim 10, **characterized in that** at least one adjustable functional element (34) is provided for setting the different functional states, wherein the actuating element (2) is or can be brought into engagement in terms of drive with the functional element (34) or is part of the functional element (34), preferably in that the functional element (34) is configured as a wire or strip and can be deflected into different functional positions, preferably **in that** the functional element (34) is configured as a resilient wire or strip and can thus be bent as a bending functional element into different functional positions.

12. Motor vehicle lock according to one of the preceding claims, **characterized in that** at least two magnetically stable driving positions of the rotor (4), preferably at least three magnetically stable driving positions of the rotor (4), furthermore preferably more than three magnetically stable driving positions of the rotor (4), can be generated by means of different steady-state energization of the coil arrangement (6) and the magnetic interaction, which is associated with the energization, between rotor (4) and stator (5), and/or **in that** at least two magnetically stable driving positions of the rotor (4), preferably at least three magnetically stable driving positions of the rotor (4), furthermore preferably more than three magnetically stable driving positions of the rotor (4), can be generated by means of energization of the coils (12-15) of the coil arrangement (6) in a coil combination, which is assigned to the respective driving position, in an energization direction, which is assigned to the respective driving position.

13. Motor vehicle lock according to Claim 10 and Claim 12, **characterized in that** at least one magnetically stable driving position is a control position of the actuating element (2) for setting a functional state of the lock mechanism (33), such as "locked", ""unlocked", "theftproof", "childproof locked" and "childproof unlocked".

14. Method for actuating a motor vehicle lock according to one of Claims 1 to 13, **characterized in that** the coil arrangement (6) is energized differently in a steady state for moving to at least two magnetically stable driving positions of the rotor (4), preferably at least three magnetically stable driving positions of the rotor (4), furthermore preferably more than three magnetically stable driving positions of the rotor (4), preferably **in that** in order to move to at least two magnetically stable driving positions, the coils (12-15) of the coil arrangement (6) in a coil combination, which is assigned to the respective driving position, are energized in a steady state in an energization direction, which is assigned to the respective driving position.

## Revendications

1. Serrure de véhicule automobile comportant un élément de positionnement (2), en particulier un arbre de commande, et un entraînement (3) servant au déplacement de l'élément de positionnement (2), l'entraînement (3) comprenant un rotor (4) et un stator (5), le stator (5) comprenant un ensemble de bobines (6) et au moins deux pôles (7-10) magnéto-conducteurs associés à l'ensemble de bobines (6) pour la conduction du champ magnétique produit par l'ensemble de bobines (6),
**caractérisée en ce que**
les pôles (7-10) forment respectivement avec le rotor (4), éventuellement en fonction de la position de rotor, un entrefer axial (11a/11b) par rapport à l'axe géométrique du rotor (4a), **en ce qu'**une première portion (6a) de l'ensemble de bobines (6) comportant au moins une bobine (12, 13) et une deuxième portion (6b) de l'ensemble de bobines (6) comportant au moins une bobine (14, 15) sont décalées axialement l'une par rapport à l'autre par rapport à l'axe géométrique du rotor (4a) et sont disposées le long de l'axe géométrique du rotor (4a) sur des côtés opposés du rotor (4).

2. Serrure de véhicule automobile selon la revendication 1, **caractérisée en ce qu'**au moins une bobine (12, 13) de la première portion (6a) de l'ensemble de bobines (6) est, par rapport à l'axe géométrique du rotor (4a), décalée angulairement par rapport à l'au moins une bobine (14, 15) de la deuxième portion (6b) de l'ensemble de bobines (6), et/ou **en ce que** les pôles magnéto-conducteurs (7-10) associés à l'ensemble de bobines (6) sont disposés sur des côtés opposés du rotor (4) le long de l'axe géométrique du rotor (4a) et forment ainsi avec le rotor (4), éventuellement en fonction de la position de rotor, des entrefers axiaux (11a, 11b) par rapport à l'axe géométrique du rotor (4a) des deux côtés du rotor (4).

3. Serrure de véhicule automobile selon l'une des revendications précédentes, **caractérisée en ce qu'**au moins une partie des bobines (12-15) des deux portions (6a, 6b) de l'ensemble de bobines (6) se chevauchent les unes les autres vues dans la direction de l'axe géométrique du rotor (4a).

4. Serrure de véhicule automobile selon l'une des revendications précédentes, **caractérisée en ce qu'**au moins une partie des bobines (12-15) de l'ensemble de bobines (6) sont orientées de telle sorte que leurs axes de bobines (12a-15a) respectifs sont parallèles à l'axe géométrique du rotor (4a), et/ou **en ce qu'**au moins l'une des deux portions (6a, 6b) de l'ensemble de bobines (6) comprend au moins une paire de bobines constituée de deux bobines (12-15) dont les axes de bobines (12a-15a) se situent sur une ligne de liaison (19, 20) passant par l'axe géométrique du rotor (4a), de préférence **en ce que** les deux portions (6a, 6b) de l'ensemble de bobines (6) comprennent respectivement une paire de bobines constituée de deux bobines (12, 13 ; 14, 15), dont les axes de bobines (12a, 13a ; 14a, 15a) se situent respectivement sur une ligne de liaison (19, 20) passant par l'axe géométrique du rotor (4a) et **en ce que** les lignes de liaison (19, 20) des deux paires de bobines opposées se situent à un angle d'approximativement 45° ou à un angle d'approximativement 90° l'une par rapport à l'autre par rapport à l'axe géométrique du rotor (4a).

5. Serrure de véhicule automobile selon l'une des revendications précédentes, **caractérisée en ce que** les bobines (12, 13) de la première portion (6a) de l'ensemble de bobines (6) présentent la même position angulaire l'une par rapport à l'autre par rapport à l'axe géométrique du rotor (4a) que les bobines (14, 15) de la deuxième portion (6b) de l'ensemble de bobines (6).

6. Serrure de véhicule automobile selon l'une des revendications précédentes, **caractérisée en ce que** la première portion (6a) de l'ensemble de bobines (6) est disposée de manière décalée angulairement par rapport à l'axe géométrique du rotor (4a) par rapport à la deuxième portion (6b) de l'ensemble de bobines (6), de préférence en ce que la première portion (6a) de l'ensemble de bobines (6) est disposée de manière décalée angulairement d'approximativement 45° ou d'approximativement 90° par rapport à l'axe géométrique du rotor (4a) par rapport à la deuxième portion (6b) de l'ensemble de bobines (6).

7. Serrure de véhicule automobile selon l'une des revendications précédentes, **caractérisée en ce que** chaque pôle (7-10) comprend un épanouissement polaire (26-29) qui est tourné vers le rotor (4) pour la formation de l'entrefer (11a, 11b) respectif, de préférence **en ce qu'**au moins une partie des épanouissements polaires (26-29) associés aux deux portions (6a, 6b) de l'ensemble de bobines (6) se chevauchent les uns les autres vus dans la direction de l'axe géométrique du rotor (4a), de préférence **en ce que** les épanouissements polaires (26-29) s'étendent au moins sur une région angulaire autour de l'axe géométrique du rotor (4a), de préférence encore **en ce qu'**un épanouissement polaire (26-29) d'un pôle (7-10) d'une portion (6a, 6b) de l'ensemble de bobines (6) sert d'élément de culasse magnétique pour deux épanouissements polaires (26-29) de l'autre portion (6a, 6b) respective de l'ensemble de bobines (6).

8. Serrure de véhicule automobile selon l'une des revendications précédentes, **caractérisée en ce que** les bobines (12-15) des deux portions (6a, 6b) de l'ensemble de bobines (6) sont configurées sous forme de parties identiques et/ou les pôles (7-10) des deux portions (6a, 6b) de l'ensemble de bobines (6) sont configurées sous forme de parties identiques et/ou les tôles de culasse magnétique (30, 31) des deux portions (6a, 6b) de l'ensemble de bobines (6) sont configurées sous forme de parties identiques.

9. Serrure de véhicule automobile selon l'une des revendications précédentes, **caractérisée en ce que** les bobines (12-15) et/ou les pôles (7-10) sont configuré(e)s, au moins dans certaines zones, de manière allongée, en particulier de manière sensiblement elliptique ou de manière sensiblement triangulaire, en section transversale perpendiculairement à l'axe géométrique du rotor (4a), et sont disposé(e)s de préférence avec leur étendue allongée (32) sensiblement tangentielle par rapport à l'axe géométrique du rotor (4a).

10. Serrure de véhicule automobile selon l'une des revendications prcédentes, **caractérisée en ce que** la serrure de véhicule automobile comprend un mécanisme de serrure (33) qui peut être amené dans différents états fonctionnels tels que « verrouillé »,« déverrouillé », « protégé contre le vol », « sécurité enfants verrouillée » et « sécurité enfants déverrouillée », et/ou **en ce que** l'élément de positionnement (2) peut être amené au moyen de l'entraînement (3) dans au moins deux positions de commande, afin de régler des états fonctionnels du mécanisme de serrure (33) tels que « verrouillé »,« déverrouillé », « protégé contre le vol », « sécurité enfants verrouillée » et « sécurité enfants déverrouillée ».

11. Serrure de véhicule automobile selon la revendication 10, **caractérisée en ce qu'**au moins un élément fonctionnel (34) déplaçable est prévu pour le réglage des différents états fonctionnels, l'élément de positionnement (2) se trouvant ou pouvant être amené en prise technique d'entraînement avec l'élément fonctionnel (34) ou étant un élément constitutif de l'élément fonctionnel (34), de préférence **en ce que** l'élément fonctionnel (34) est configuré sous forme de fil métallique ou de bande et peut être dévié dans différentes positions fonctionnelles, de préférence **en ce que** l'élément fonctionnel (34) est configuré sous forme de fil métallique ou de bande élastique et peut ainsi, en tant qu'élément fonctionnel flexible, être fléchi dans différentes positions fonctionnelles.

12. Serrure de véhicule automobile selon l'une des revendications précédentes, **caractérisée en ce que** par une alimentation en courant stationnaire différente de l'ensemble de bobines (6) et par l'interaction magnétique, associée à l'alimentation en courant, entre le rotor (4) et le stator (5), au moins deux positions d'entraînement magnétiquement stables du rotor (4), de préférence au moins trois positions d'entraînement magnétiquement stables du rotor (4), de préférence encore plus de trois positions d'entraînement magnétiquement stables du rotor (4), peuvent être produites, et/ou **en ce que** par une alimentation en courant des bobines (12-15) de l'ensemble de bobines (6) dans une combinaison de bobines associée à la position d'entraînement respective dans une direction d'alimentation en courant associée à la position d'entraînement respective, au moins deux positions d'entraînement magnétiquement stables du rotor (4), de préférence au moins trois positions d'entraînement magnétiquement stables du rotor (4), de préférence encore plus de trois positions d'entraînement magnétiquement stables du rotor (4), peuvent être produites.

13. Serrure de véhicule automobile selon la revendication 10 et la revendication 12, **caractérisée en ce qu'**au moins une position d'entraînement magnétiquement stable est une position de commande de l'élément de positionnement (2) pour le réglage d'un état fonctionnel du mécanisme de serrure (33) tel que « verrouillé »,« déverrouillé », « protégé contre le vol », « sécurité enfants verrouillée » et « sécurité enfants déverrouillée ».

14. Procédé de commande d'une serrure de véhicule automobile selon l'une des revendications 1 à 13, **caractérisé en ce que** l'ensemble de bobines (6) est, pour atteindre au moins deux positions d'entraînement magnétiquement stables du rotor (4), de préférence au moins trois positions d'entraînement magnétiquement stables du rotor (4), de préférence encore plus de trois positions d'entraînement magnétiquement stables du rotor (4), alimenté en courant stationnaire différemment, de préférence **en ce que**, pour atteindre au moins deux deux positions d'entraînement magnétiquement stables, les bobines (12-15) de l'ensemble de bobines (6) sont alimentées en courant stationnaire dans une combinaison de bobines associée à la position d'entraînement respective dans une direction d'alimentation en courant associée à la position d'entraînement respective.
